# EUROPÄISCHE PATENTANMELDUNG

(11) **EP 2 796 181 A2**
(43) Veröffentlichungstag der Anmeldung: **29.10.2014**
(21) Anmeldenummer: 14157741.1
(22) Anmeldetag: 05.03.2014
(51) Int. Cl.: B01D 46/10

(54) **Filtervorrichtung**

(30) Priorität: 06.03.2013 DE 202013100963 U
(71) Anmelder: HEYLO GmbH, 28832 Achim (DE)
(72) Erfinder: Wittleder, Thomas, 22605 Hamburg (DE)
(74) Vertreter: Richter Werdermann Gerbaulet Hofmann

(57) **Zusammenfassung**

Um eine Filtervorrichtung (100) zur Filterung eines Farbnebels, insbesondere von mittels Druckluft und/oder mittels einer Sprühpistole versprühten Farben für das Maler- und Lackierhandwerk sowie zur Verwendung auf Baustellen zu schaffen, wird eine Filtervorrichtung vorgeschlagen, welche umfasst a) ein Filtergehäuse (10) mit mindestens einer Lufteintrittsseite (11), an der im Filtergehäuse (10) ein wechselbarer Filter (12) zur Filterung des Farb-Sprühnebels angeordnet ist, mit einer Luftaustrittsseite (13), an der ein Anschlussstück (14) zum Verbinden des Filtergehäuses (10) mit einer Lüftereinheit (15) angeordnet ist, wobei das Filtergehäuse (10) als Filtervorsatz für die Lüftereinheit ausgeführt ist, und b) die Lüftereinheit (15) umfasst ein Lüftergehäuse (16) mit einer Lufteintrittsseite (17) und einer Luftaustrittsseite (18), wobei im Lüftergehäuse (16) ein Lüfter (20) und eine mit dem Lüfter (20) verbundene Antriebseinheit (21) angeordnet sind, c) wobei die Filtervorrichtung (100) als nicht-stationäre bzw. transportable, mobile Einheit ausgeführt ist.

## Beschreibung

### Technisches Gebiet

Die Erfindung betrifft eine Filtervorrichtung zur Filterung eines Farbnebels, insbesondere von mittels Druckluft und/oder mittels einer Sprühpistole versprühten Farben für das Maler- und Lackierhandwerk sowie zur Verwendung auf Baustellen.

Beim Auftragen von Farben bzw. bei Lackierarbeiten an Oberflächen besteht einerseits der Wunsch, den Farbnebel vom Auftragenden möglichst fernzuhalten und andererseits die Farbe des auftretenden Farbnebels zu entsorgen. Das betrifft insbesondere das Auftragen von Wandfarben oder das Lackieren von Türen, Türrahmen oder ähnliches durch das Maler- und Lackierhandwerk.

### Stand der Technik

Aus der DE 649 266 C ist eine Spritzanlage mit Ableitung des zurückschlagenden Farbnebels durch Absaugen der Luft aus einem Spritzraum bekannt. Die Anlage umfasst einen Arbeitstisch und eine die Rückseite des Arbeitstisches oberhalb des Tisches abschließende Saugmuschel einer Absaugleitung. Die Saugmuschel besitzt unterhalb des Tisches einen Fortsatz, der durch an den Seitenkanten und der Vorderkante des Tisches angeordnete Längsschlitze mit dem freien Raum oberhalb des Tisches in Verbindung steht. Oberhalb der parallellaufenden, seitlich angeordneten Tischschlitze sind anschließend an die Oberkante der Saugmuschel Druckluftrohre angeordnet, welche mit einer Druckluftquelle in Verbindung stehen und an der Unterseite je eine abwärts gerichtete Schlitzdüse besitzen, so dass die aus diesen Schlitzdüsen in einen dünnen Schleier austretende Druckluft auf die Schlitze des Tisches gerichtet ist und durch diese Schlitze an- und abgesaugt wird. Ein Druckluftrohr verbindet die beiden seitlich angeordneten Druckluftrohre und ist ebenfalls mit einer abwärts gerichteten Schlitzdüse versehen, so dass die aus dieser Schlitzdüse in einem dünnen Schleier austretende Druckluft auf den vorderen Schlitz des Tisches gerichtet ist und durch diesen abgesaugt wird.

Eine andere Absaugvorrichtung ist aus der DE 736 188 C bekannt. Diese Lösung nutzt eine Kabine, einen Lüfter und einen Motor, wobei ein Spritzgerät zum Einsatz kommt.

### Darstellung der Erfindung: Aufgabe, Lösung, Vorteile

Der Erfindung liegt die Aufgabe zugrunde, eine Lösung zu finden, um in Baustellen die Arbeitsbedingungen der Maler und Lackierer zu verbessern und um eine einfache und umweltfreundliche Entsorgung des Farbnebels zu erreichen.

Diese Aufgabe wird durch eine Vorrichtung mit den im Anspruch 1 angegebenen Merkmalen gelöst.

Die Grundüberlegung beruht darauf, dass das Malerhandwerk bzw. Maler- und Lackierhandwerk auf Baustellen häufiger Farben mit Druckluft aufträgt und dabei sicherstellen muss, dass die auftretenden Farbnebel in irgendeiner Weise entsorgt werden. Auch müssen oftmals Staubnebel oder Holzstaubnebel entsorgt werden.

Der Einsatz der Erfindung ist daher nicht nur auf das Malerhandwerk beschränkt, denkbar ist auch ein anderer Einsatz in Industrie und anderen Gewerbezweigen.

Die Erfindung beruht auf der Erkenntnis, dass ein mobiler Lüfter zum Einsatz kommt, an dem quasi davor eine Einheit angeflanscht wird. Diese Einheit besteht im Grunde aus einem Anschluss für den Lüfter, wobei z. B. in der Mitte eine Aufnahme für den Filter vorhanden ist. Denkbar wäre, dass sich ansaugseitig noch ein Stutzen für einen Schlauchbetrieb anbringen ließe.

Der Einsatz-Filter könnte aus einem Spezialmaterial, wie etwa Glasfaserflies, z. B. der Güteklasse G3 gemäß EN 779, bestehen, welches in der Lage wäre, große Mengen von Farbnebel aufzunehmen. Wenn der Einsatz-Filter voll ist, ließe sich ein Deckel der Einheit öffnen und der Filter in einfacher Weise austauschen.

Das Filtermaterial kann durch einen Ersatzfilter ausgetauscht werden und ist vorzugsweise in einem Rahmen bzw. einer Filterkassette angeordnet. Die Filterkassettte kann passgenau in die Filtervorrichtung eingeschoben werden.

Die Kombination der beiden Haupt-Komponenten, nämlich der Filteraufnahme-Einheit und dem Lüfter bzw. der Lüftereinheit, erlaubt ein einfaches Filtern des Farbnebels auf bzw. in Baustellen. Die erfindungsgemäße mobile Filtervorrichtung kann von Baustelle zu Baustelle leicht transportiert und innerhalb der Baustelle leicht bewegt werden. Die Lüftervorrichtung wird immer in der Nähe der Sprühpistole des Lackierers aufgestellt, wobei die Erfindung bei Verwendung von Lacken sehr vorteilhaft ist, da diese ohne jeden Schutz gesundheitsgefährdend sind. In Kombination mit einem Atemschutz bzw. einer Atemmaske ist die Erfindung sehr geeignet, weil die Atemmaske einem erheblich geringeren Farbnebel ausgesetzt ist und ihre Filterwirkung dadurch stets optimal ist. Ein Farbnebel im Atembereich des Lackierers ist kaum vorhanden.

Die Erfindung ist nicht nur in geschlossenen Räumen zweckmäßig, sondern auch im Freien sehr geeignet. Im Freien wäre ohne die Erfindung der Einsatz einer Lackierpistole unter Umständen, z. B. aus Umweltschutzgründen, teilweise gar nicht möglich bzw. nicht zugelassen.

Verwendet werden kann ein Lackfiltervorsatzstück zusammen mit einem Axialventilator.

Weitere vorteilhafte Ausgestaltungen der Erfindung sind in den Unteransprüchen gekennzeichnet.

In einer vorteilhaften Weiterbildung der erfindungsgemäßen Filtervorrichtung ist vorgesehen, dass das Filtergehäuse einen Filterkasten umfasst, der einen Filterbereich mit einem größeren Querschnitt als ein sich an dem Lüftergehäuse anschließenden Anschlusskanal aufweist. Zwischen dem Filterbereich und dem Anschlusskanal ist ein trichterförmig sich verkleinernder Zwischenbereich vorhanden. Damit ist es möglich, eine große Filterfläche zu verwenden, so dass eine große Menge an Farbe des Farbnebels bei geringer Lüfterleistung ansaugbar und im Filter entsorgbar ist.

Übliche rechteckige Filter lassen sich bei strömungsgünstiger Bauform der Filtervorrichtung verwenden, wenn nach einer weiteren vorteilhaften Weiterbildung der erfindungsgemäßen Filtervorrichtung der Filterbereich einen rechteckigen, insbesondere quadratischen Querschnitt zur Aufnahme eines rechteckigen, insbesondere quadratischen Filters aufweist. Der sich an dem Lüftergehäuse anschließende Anschlusskanal ist als rundes Rohrstück ausgeführt und kann leicht an einem Axiallüfter angeschlossen werden. Das trichterförmige Zwischenstück geht dann von einer rechteckigen, insbesondere quadratischen Form in eine runde Form über, um die Luftströmung optimal zu leiten.

Das Anschlussstück des Filtergehäuses weist bevorzugter Weise eine bajonettartige Verbindung auf. An einem dem Lüfter nahen Ende des Blech-Rohrstücks können ein oder mehrere L-förmige Einschnitte vorhanden sein, die mit Zapfen oder Schrauben des Lüftergehäuses korrespondieren, so dass der Filtervorsatz bzw. die Filtereinheit, d. h. das Filtergehäuse, durch eine Schiebe- und Drehbewegung am Lüftergehäuse schnell fixierbar ist.

Zweckmäßigerweise weist der Filterbereich, d. h. die wirksame Filteroberfläche, eine mindestens doppelt so große, insbesondere etwa 2,5 bis 2,8 mal so große Fläche auf wie die Querschnittsfläche des sich an dem Lüftergehäuse anschließenden Anschlusskanals. Kombiniert mit einer großen Filterdicke, von beispielsweise 10 cm, gewährt dies, dass ein ausreichende Filtervolumen zur Farbaufnahme zur Verfügung steht und dass unter Kostengesichtspunkten für die Einsatz-Filter ein leichter Transport der Filtervorrichtung möglich ist. Ein zu großer Filter ist nämlich sperrig. Bei einer weiteren vorteilhaften Ausführung der Erfindung umfasst das Filtergehäuse ein an der Lufteintrittsseite angeordnetes Schutzgitter. Dieses Schutzgitter verhindert eine mechanische Beschädigung des Filters während eines Transports und kann den Filter stützen.

Eine besonders bevorzugte Weiterbildung der Erfindung zeichnet sich dadurch aus, dass die Lüftereinheit einen Axiallüfter und ein im Wesentlichen zylinderförmiges Lüftergehäuse mit einem im zylinderförmigen Lüftergehäuse integrierten Elektromotor, der die Antriebseinheit bildet, umfasst. Das Lüftergehäuse besteht aus Gründen der Gewichtsersparnis vorzugsweise im Wesentlichen aus Kunststoff. Dies ist für Baustellen sehr geeignet.

Es ist von Vorteil, wenn das Filtergehäuse als Blechgehäuse ausgeführt ist, während das Lüftergehäuse aus Kunststoff besteht. Durch die Blechkonstruktion des Filtergehäuses ist eine wirtschaftliche Fertigung auch bei geringeren Stückzahlen möglich. Blechkomponenten aus der Klimatechnik können so leicht verwendet werden. Alternativerweise kann das Filtergehäuse als Kunststoffgehäuse ausgebildet sein. Dadurch kann das Gewicht der Filtervorrichtung weiter reduziert werden.

Die Filtervorrichtung kann aus sendzimir-verzinktem Blech gefertigt sein und kann dadurch in vorteilhafter Weise mit Lösungsmitteln gereinigt werden, um nach einem Einsatz der Filtervorrichtung die am Blechgehäuse vorhandenen Farbreste beseitigen zu können.

In die Lüftereinheit ist beispielsweise ein 12 inch Lüfter bzw. ein Lüfter mit üblicherem Maß, welches insbesondere in der Schifffahrt genutzt wird, einsetzbar. Das Gehäuse der Lüftereinheit kann alternativ aus Metall ausgeführt sein. Metall eignet sich für besonders schwere Anwendungen oder für Ex-geschützte Lüfter. Kunststoff dagegen wird aus Gewichtsgründen eingesetzt.

Denkbar sind Ausführungen mit verschiedenen Lüfterleistungen, z. B. mit drei Lüftergrößen, z. B. im geeigneten Bereich von 1.200 m²/h Luftvolumen bis 8.000 m²/h Luftvolumen. Möglich ist auch ein modularer Aufbau mit verschiedenen Filtermodulen und/oder Lüftermodulen. Es kann im Grunde ein kleiner Filter mit einem großen Lüfter und auch umgekehrt kombiniert werden, und zwar je nach Einsatzgebiet. Eine Lüfterleistung von etwa 3600 m²/h wäre jedenfalls sehr geeignet. Eine bevorzugte Höhe, Breite und/oder Tiefe des Lüftergehäuses könnte im Bereich zwischen 350mm und 650 mm liegen.

In einer weiteren vorteilhaften Weiterbildung der erfindungsgemäßen Filtervorrichtung ist vorgesehen, dass die Lüftereinheit und vorzugsweise auch die Filtereinheit an ihrem Lüftergehäuse Standelemente aufweist Es können zwei oder mehrere hintereinander liegende Standfüße verwendet werden, die einen sicheren Stand der Vorrichtung ermöglichen. Die Füße heben außerdem das Lüftergehäuse soweit an, dass die Filtervorrichtung waagerecht steht und der Filterkasten bzw. das vordere Teil des Lüftervorsatzes den Boden nicht berührt. Um den Transport zu erleichtern, ist ferner vorgesehen, dass das Lüftergehäuse mit einem Handgriff versehen ist. Füße und Handgriff sind vorzugsweise einstückig am Filtergehäuse angeformt.

Die Filtereinheit selber kann zusätzlich mindestens noch einen weiteren Fuß haben, damit ein stabiler Halt gegeben ist und damit die Filtereinheit auch ohne die Lüftereinheit auf dem Boden lagerichtig abstellbar ist.

Auch kann die Filtereinheit mit Lagerelementen, beispielsweise Blechstegen, versehen sein, auf denen der Filter bzw. die Filterkassette lagert. Dies hat den Vorteil, dass der Filtereinsatz bzw. die Filterkassette mit dem Filtermaterial aus dem Gerät ohne Schwierigkeiten herausnehmbar ist. Dadurch wird außerdem verhindert, dass vom die Filter gesammelte Farbe an einem Boden der Filteraufnahme festklebt.

Zur Vergrößerung der effektiven Ansaugfläche ist bevorzugterweise vorgesehen, dass im Bereich der Lufteintrittsseite des Filtergehäuses ein Mittel zur Vergrößerung der Ansaugfläche angeordnet ist. Das Mittel zur Vergrößerung der Ansaugfläche weist eine Ansaugöffnung auf, welche mit der Lufteintrittsseite des Filtergehäuses korrespondiert oder mit der Lufteintrittsseite des Filtergehäuses fluchtend angeordnet ist. Zumindest bereichsweise um die Ansaugöffnung des Mittels zur Vergrößerung der Ansaugfläche ist eine gebogene, gekrümmte oder trichterförmige Wand angeordnet. Die Wand ist bevorzugterweise derart gebogen, gekrümmt oder trichterförmig ausgebildet, dass sie zumindest bereichsweise von der Lufteintrittsseite des Filtergehäuses weggerichtet ist beziehungsweise von der Lufteintrittsseite des Filtergehäuses absteht. Besonders bevorzugterweise ist das Mittel zur Vergrößerung der Ansaugfläche zusammenlegbar, faltbar oder flexibel ausgebildet. Des Weiteren ist bevorzugterweise vorgesehen, dass das Mittel zur Vergrößerung der Ansaugfläche aus Kunststoff besteht. Das Mittel zur Vergrößerung der Ansaugfläche kann fest mit dem Filtergehäuse verbindbar ausgebildet sein, beziehungsweise fest mit dem Filtergehäuse verbunden sein. Beispielsweise kann das Mittel zur Vergrößerung der Ansaugfläche stirnseitig auf die umlaufende Kante der Lufteintrittsseite des Filtergehäuses aufgesetzt oder aufgeschraubt sein. Hierfür können beispielsweise um die Ansaugöffnung des Mittels zur Vergrößerung der Ansaugfläche herum Öffnungen zur Aufnahme von Schrauben vorgesehen sein.

Bevorzugterweise wird durch das Mittel zur Vergrößerung der Ansaugfläche die effektive Ansaugfläche um einen Faktor von mindestens 4 vergrößert. Somit ist bevorzugterweise vorgesehen, dass die durch das Mittel zur Vergrößerung der Ansaugfläche eingespannte beziehungsweise definierte Eintrittsfläche mindestens dem vierfachen der Querschnittsfläche der Lufteintrittsseite des Filtergehäuses entspricht.

Ferner ist bevorzugterweise vorgesehen, dass der wechselbare Filter zur Filterung des Farb-Sprühnebels mindestens zweilagig ausgebildet ist. Die beiden Lagen des mindestens zweilagigen Filters weisen dabei bevorzugterweise unterschiedliche Materialien auf oder bestehen aus unterschiedlichen Materialien. Die beiden Lagen können miteinander verklebt sein.

Bevorzugterweise weist eine erste Lage des mindestens zweilagigen Filters Glasfasern auf und/oder ist als Glasfaservlies ausgebildet. Des Weiteren ist bevorzugterweise vorgesehen, dass die zweite Lage des mindestens zweilagigen Filters Polyester aufweist und/oder als Polyestervlies ausgebildet ist. Bevorzugterweise ist die erste Lage des mindestens zweilagigen Filters in Ansaugrichtung vor der zweiten Lage angeordnet. Somit ist bevorzugterweise vorgesehen, dass die erste Lage des mindestens zweilagigen Filters an ein Schutzgitter des Filtergehäuses grenzt beziehungsweise daran anschließt. Die zweite Lage ist somit bevorzugterweise zur Verbindung mit der Lüftereinheit hin gerichtet.

Durch das Vorsehen eines mindestens zweilagigen Filters mit Lagen aus unterschiedlichen Materialien kann der Filtergrad weiter verbessert werden. Beispielsweise ist eine glaserfaseraufweisende Lage sehr gut zur Farb-Nebel-Abscheidung geeignet. Die polyesteraufweisende zweite Lage dient insbesondere zur Grobstaubfilterung.

Zur Verbindung der Lüftereinheit mit dem Filtergehäuse ist bevorzugterweise eine weiter verbesserte, bajonettartige Verbindung vorgesehen. Hierfür ist im Bereich der Lufteintrittsseite der Lüftereinheit in einer Innenwand des Lüftergehäuses eine Ausnehmung beziehungsweise Vertiefung angeordnet. Als passendes Gegenstück ist an einer Außenwand des Filtergehäuses eine Erhebung angeordnet, welche in die Vertiefung in der Innenwand des Lüftergehäuses einführbar ist. Die Ausnehmung beziehungsweise Vertiefung in der Innenwand des Lüftergehäuses ist ferner bevorzugterweise länglich und/oder schienenförmig ausgebildet. Besonders bevorzugterweise ist die Ausnehmung beziehungsweise Vertiefung im Wesentlichen L-förmig ausgebildet beziehungsweise weist mindestens zwei in einem Winkel zueinanderstehende längliche Abschnitte auf. Die Erhebung auf der Außenwand des Filtergehäuses ist bevorzugterweise quaderförmig ausgebildet. Des Weiteren weist die Erhebung bevorzugterweise eine Höhe auf, welche im Wesentlichen der Tiefe der Ausnehmung beziehungsweise Vertiefung in der Innenwand des Lüftergehäuses entspricht. Ferner ist bevorzugterweise vorgesehen, dass die Breite der an der Außenwand des Filtergehäuses angeordneten Erhebung im Wesentlichen der Breite der in der Innenwand des Lüftergehäuses angeordneten Ausnehmung beziehungsweise Vertiefung entspricht.

Bevorzugterweise sind mehrere, ganz besonders bevorzugterweise mindestens vier, Ausnehmungen beziehungsweise Vertiefungen umfänglich in der Innenwand des Lüftergehäuses verteilt angeordnet. Ferner sind bevorzugterweise mehrere, ganz bevorzugterweise mindestens vier, korrespondierende Erhebungen an der Außenwand des Filtergehäuses vorgesehen. Ferner ist bevorzugterweise vorgesehen, dass die Erhebungen im Bereich des Anschlussstücks an der Luftaustrittsseite des Filtergehäuses angeordnet sind.

Bevorzugterweise sind die Ausnehmungen und die Erhebungen derart ausgebildet sowie an der Innenwand des Lüftergehäuses beziehungsweise an der Außenwand des Filtergehäuses angeordnet, dass das Lüftergehäuse und das Filtergehäuse durch Ineinanderschieben und anschließendes zueinander entgegengesetztes Drehen miteinander verbindbar sind. Dabei kann auch nur eine der beiden Einheiten, beispielsweise die Filtereinheit, gedreht werden, wobei die andere Einheit, beispielsweise die Lüftereinheit, in der Position gehalten wird. Somit können die Lüftereinheit und das Filtergehäuse in einfacher Weise miteinander verbunden und voneinander getrennt werden, wobei durch die spezielle bajonettartige Ausgestaltung der Verbindung durch das Vorsehen von Ausnehmungen beziehungsweise Vertiefungen in der Innenwand des Lüftergehäuses und korrespondierenden Erhebungen an der Außenwand des Filtergehäuses eine hinreichend luftdichte Verbindung zwischen der Lüftereinheit und dem Filtergehäuse ermöglicht wird. Ganz besonders bevorzugterweise sind die Ausnehmungen beziehungsweise Vertiefungen als metallaufweisende Schienen ausgebildet beziehungsweise weisen Metall auf.

Erfindungsgemäß ist ferner vorgesehen, dass die Lüftereinheit mit im Bereich dessen Lufteintrittsseite an einer Innenwand des Lüftergehäuses vorgesehenen Ausnehmungen beziehungsweise Vertiefungen zur Aufnahme von korrespondierenden Erhebungen mit einer entsprechend ausgebildeten Filtereinheit sowie mit anderen Vorrichtungen verbindbar ist. Beispielsweise kann die Lüftereinheit somit über eine derartige spezielle bajonettartige Verbindung mit einem Schlauch, Staubauffangvorrichtung, beispielsweise Staubsäcken, oder Zwischenstücken und/oder Adaptern verbunden werden. Beispielsweise können Zwischenstücke oder Adapter zwischen einer Lüftereinheit und dem Filtergehäuse angeordnet werden. Hierdurch ist eine räumliche Trennung des Filtergehäuses von der Lüftereinheit möglich. Des Weiteren können Adapter zur Vergrößerung oder Verkleinerung des Durchmessers über die spezielle bajonettartige Verbindung an die Lufteintrittsseite des Lüftergehäuses angeschlossen werden. Beispielsweise kann ein Adapter zur Verbindung der Lufteintrittsseite des Lüftergehäuses mit mehreren, beispielsweise drei oder vier, Schläuchen angeschlossen werden.

Die erfindungsgemäße Filtervorrichtung wird für Baustellen verwendet, so dass ein Verfahren zum Filtern eines Farbnebels in Baustellen mit einer in Nähe einer Sprühpistole oder einer anderen Sprühvorrichtung aufstellbaren mobilen erfindungsgemäßen Filtervorrichtung besonders vorteilhaft ist. Wird eine zu lackierende Fläche mit der Sprühpistole bearbeitet und es soll die nächste Fläche bearbeitet werden, wird die mobile Filtervorrichtung ein Stück weiter bewegt, so dass der nicht auf die zu lackierende Fläche treffende Farbnebel gefiltert wird.

### Kurze Beschreibung der Zeichnungen

Ein Ausführungsbeispiel wird anhand der Zeichnungen näher erläutert, wobei weitere vorteilhafte Weiterbildungen der Erfindung und Vorteile derselben beschrieben sind.

Es zeigen:
Fig. 1 eine perspektivische Darstellung einer erfindungsgemäßen Filtervorrichtung,
Fig. 2 eine weitere perspektivische Darstellung der erfindungsgemäßen Filtervorrichtung von einer anderen Perspektive aus gesehen,
Fig. 3 eine Darstellung eines Filtergehäuses der Filtervorrichtung von hinten gesehen,
Fig. 4 eine Darstellung des Filtergehäuses der Filtervorrichtung von der Seite aus gesehen,
Fig. 5 eine Darstellung eines Verbindungsabschnitts des Filtergehäuses flach abgewickelt,
Fig. 6 eine perspektivische Darstellung eines Schlauchanschlussstutzens der erfindungsgemäßen Filtervorrichtung,
Fig. 7 eine Darstellung des Schlauchanschlussstutzens der erfindungsgemäßen Filtervorrichtung von der Seite gesehen,
Fig. 8 eine schematische Darstellung einer Lüftereinheit der Filtervorrichtung,
Fig. 9 a perspektivische Ansicht einer Filtervorrichtung mit einem am Filtergehäuse angeordneten Mittel zur Vergrößerung der Ansaugfläche,
Fig. 9b weitere perspektivische Ansicht einer Filtervorrichtung mit am Filtergehäuse angeordnetem Mittel zur Vergrößerung der Ansaugfläche,
Fig. 10a perspektivische Ansicht einer bajonettartigen Verbindung zwischen Filtergehäuse und Lüftereinheit einer Filtervorrichtung, und
Fig. 10b weitere perspektivische Ansicht einer bajonettartigen Verbindung zwischen Filtergehäuse und Lüftereinheit einer Filtervorrichtung.

In den Figuren sind gleiche Teile mit denselben Bezugszeichen versehen.

### Bevorzugte Ausführungsformen der Erfindung

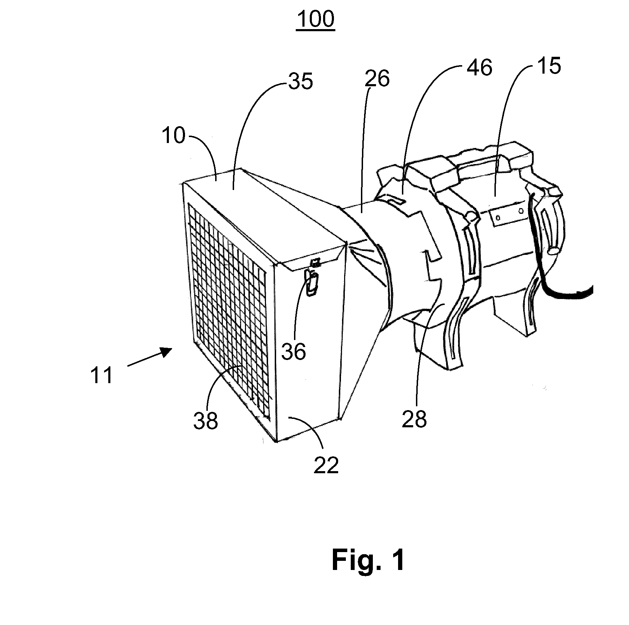

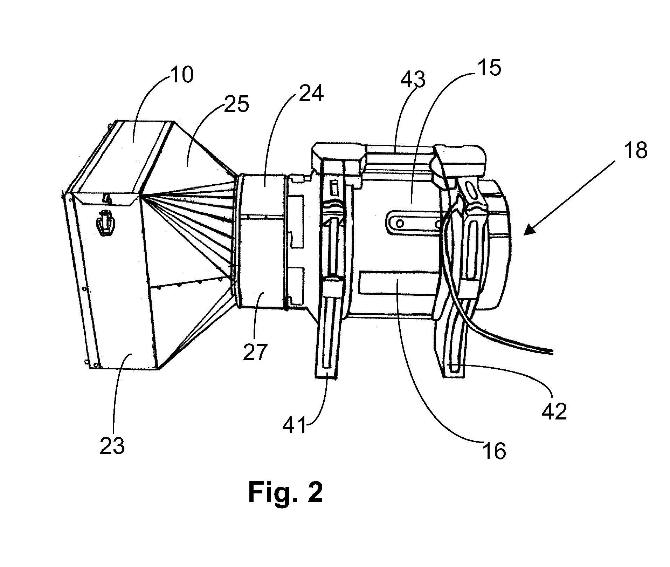

Die Fig. 1 und 2 zeigen eine bevorzugte Ausführungsform einer Filtervorrichtung 100. Diese dient zur Filterung eines Farbnebels. Dieser entsteht beim Versprühen einer Lackfarbe, die mittels Druckluft bzw. mittels einer in der Zeichnung nicht dargestellten Sprühpistole aufgetragen wird. Die Vorrichtung 100 ist auch für andere Farben, wie Wandfarben, Lasuren und dergleichen geeignet, die in Maler- und Lackiererbetrieben üblicherweise verwendet werden. Im Maler- und Lackierhandwerk werden solche Farben häufig in Baustellen durch mit Hochdruck bzw. einem Kompressor betriebene Sprühpistolen verwendet. Hierbei entsteht ein feiner Sprühnebel bzw. ein Farbnebel.

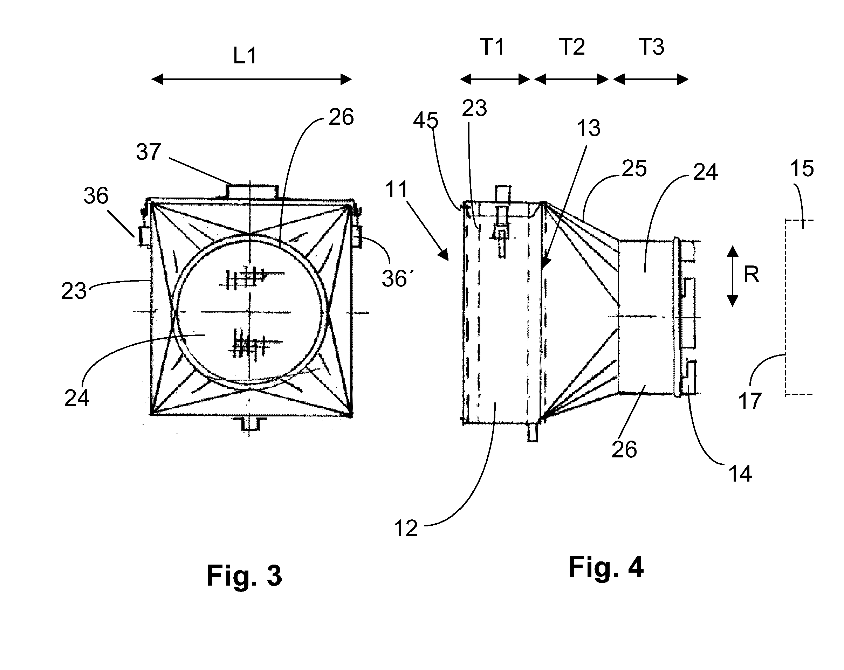

Die Vorrichtung 100 umfasst ein Filtergehäuse 10. Das Filtergehäuse 10 umfasst eine Lufteintrittsseite 11, an der ein in Fig. 4 angedeuteter Filter 12 zur Filterung des Farb-Sprühnebels angeordnet ist. Der Filter 12 ist in der Nähe dieser Seite 11 im Filtergehäuse 10 angeordnet. Weiterhin hat das Filtergehäuse 10 eine der Lufteintrittsseite 11 gegenüberliegende Luftaustrittsseite 13, an der ein Anschlussstück 14 zum Verbinden des Filtergehäuses 10 mit einer Lüftereinheit 15 angeordnet ist. Das Filtergehäuse 10 ist als Filtervorsatz für die Lüftereinheit 15 ausgeführt. An der Lufteintrittsseite 11 wird der Farbnebel angesaugt.

Die Lüftereinheit ist in Fig. 4 angedeutet dargestellt und deutlich in den Figuren 1 und 2 zu erkennen, wobei in Fig. 4 der Filtervorsatz mit dem Filter 12 von der Lüftereinheit 15 auseinandergezogen dargestellt ist.

Die Vorrichtung 100 umfasst im Wesentlichen das Filtergehäuse 10 und die Lüftereinheit 15, wie die Fig. 1 und 2 veranschaulichen. Die Lüftereinheit 15 umfasst ein Lüftergehäuse 16 mit einer Lufteintrittsseite 17, die in Fig. 4 gekennzeichnet ist, und einer Luftaustrittsseite 18, die in Fig. 2 gekennzeichnet ist.

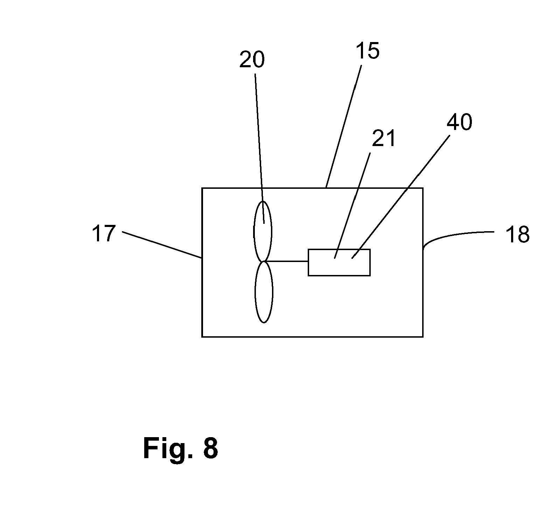

Im Lüftergehäuse ist ein in Fig. 8 gezeigter Lüfter 20 bzw. ein Ventilator und eine mit dem Lüfter 20 verbundene, ebenfalls in Fig. 8 gezeigte elektromotorische Antriebseinheit 21 angeordnet. Die Filtervorrichtung 100 ist als nicht-stationäre bzw. transportable Einheit ausgeführt. Diese ist also nicht fest in einer Kabine fest montiert. Die Filtervorrichtung 100 kann unabhängig von dem mit der Sprühpistole verbundenen Kompressor auf dem Boden abgestellt werden und in der Nähe der Sprühpistole ihre Saugwirkung entfalten.

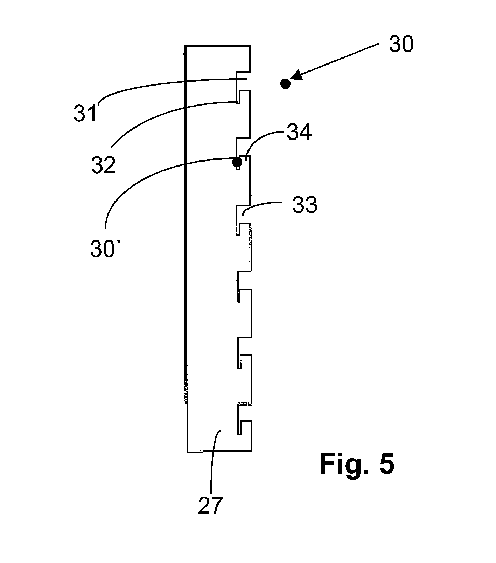

Das Filtergehäuse 10 umfasst einen Filterkasten 22, wie Fig. 1 veranschaulicht, der einen Filterbereich 23 mit einem größeren Querschnitt als ein sich an dem Lüftergehäuse 16 anschließenden Anschlusskanal 24 aufweist, wie die Figuren 3 und 4 zeigen. Zwischen dem Filterbereich 23 und dem Anschlusskanal 24 ist ein trichterförmig sich verkleinernder bzw. verjüngender Zwischenbereich 25 vorhanden. Der Zwischenbereich dient auch dazu, die Querschnittsform des Filtergehäuses 10 an die Querschnittsform des Anschlusskanals 24 anzupassen. Der Filterbereich 23 hat nämlich einen quadratischen Querschnitt zur Aufnahme des quadratischen Filters 12, während der sich an dem Lüftergehäuse 16 anschließende Anschlusskanal 24 als rundes Rohrstück 26 ausgeführt ist, wie in den Figuren 1 und 4 gut zu sehen ist. Das im Zwischenbereich 25 liegende Zwischenstück 27a (Fig. 2) geht von einer quadratischen Form in eine runde Form über, wobei das Anschlussstück 14 (Fig. 4) des Filtergehäuses 10 bzw. des Anschlusskanals 24 eine bajonettartige Verbindung aufweist, die in den Figuren 4 und 5 erkennbar ist. Diese Verbindung wird durch L-förmige Materialeinschnitte 33 im Anschlussstück 14 geschaffen. Ein in einem Lüfterbereich 28 (Fig. 1) angeordneter Zapfen 30, der in Fig. 5 angedeutet ist, taucht beim Verbinden des Filtervorsatzes an das Lüftergehäuse 16 in eine erste Aussparung 31, die eine Schiebebewegung erlaubt, und dann in eine zweite Aussparung 32, die eine Drehbewegung erlaubt, um das Filtergehäuse 10 mit dem Lüftergehäuse 16 fest zu verbinden. Der Zapfen 30' liegt bereits in der zweiten Aussparung 32, so dass eine Zunge 34 den Zapfen 30' hintergreift. Jeder Zapfen 30 bzw. 30' kann eine runde oder rechteckige Form haben.

Fig. 5 zeigt also wie das dem Lüftergehäuse 16 zugewandte Rohrstück 26 mit dem Lüftergehäuse 16 befestigbar ist. Wie Fig. 5 zeigt, sind mehrere, z. B. sechs L-förmige Einschnitte 33 für sechs Zapfen 30 vorhanden, wobei in Fig. 5 zwei Zapfen 30, 30' abgebildet sind.

Der Filterbereich 23 ist im Querschnitt größer als der Anschlusskanal 24. Der Filterbereich 23 hat eine mindestens doppelt so große, insbesondere etwa 2,7-mal so große Querschnittsfläche wie der Querschnitt des sich an dem Lüftergehäuse 16 anschließende Anschlusskanal 24. Eine Seitenlänge L1 des Filterbereichs 23 beträgt etwa 300 mm bis 500 mm, bzw. 410 mm. Dies entspricht einer Querschnittsfläche des Filterbereichs 23 von 1681 cm². Der Radius R des Rohrstückes 26 beträgt etwa 100mm bis 180mm, z. B. 140 mm. Dies entspricht einer Querschnittsfläche des Rohrstückes 26 von 615 cm².

Die Tiefen (Fig. 4) der Abschnitte des Filtervorsatzes betragen T1=140mm (100mm - 180mm), T2=160mm (120mm - 200mm), T3=140mm (100mm - 180mm).

Das Filtergehäuse 10 hat einen seitlich des Filters 12 abnehmbaren Filterdeckel 35. Dieser ist zum Austausch des als Einsatz-Filter ausgeführten Filters 12 vorgesehen. Der Filterdeckel 35 lässt sich vollständig entfernen und ist mit mindestens einem Schnellverschluss 36, 36' (Fig. 3) verschließbar und wieder entfernbar. Der Filterdeckel 35 ist in einer Gebrauchsstellung der Filtervorrichtung oben angeordnet. Ein am Filterdeckel vorhandener Deckelgriff 37 (Fig. 3) erleichtert das Wechseln des Filters 12.

Wie in Fig. 1 weiterhin zu sehen ist, hat das Filtergehäuse 10 ein an der Lufteintrittsseite 11 angeordnetes Schutzgitter 38. Das Schutzgitter 38 ist mit Einziehmuttern 45 (Fig. 4) befestigbar.

Die in Fig. 8 gezeigte Lüftereinheit 15 umfasst einen Axiallüfter 20 und ein zylinderförmiges Lüftergehäuse 16 (Fig. 2) mit einem im zylinderförmigen Lüftergehäuse 16 integrierten Elektromotor 40 der Antriebseinheit 21.

Das Filtergehäuse 10 ist als Blechgehäuse ausgeführt. Das Lüftergehäuse 16 besteht aus Kunststoff.

Die Lüftereinheit 15 hat an ihrem Lüftergehäuse 16 Standelemente, und zwar zwei hintereinander liegende Standfüße 41, 42 (Fig. 2), die so breit sind, dass die Lüftervorrichtung 100 nicht seitlich kippen kann. Das Lüftergehäuse 16 wird durch die Füße 41, 42 soweit angehoben, dass die Filtervorrichtung 100, waagerecht aufstellbar ist, wobei das Lüftergehäuse 16 mit einem Handgriff 43 (Fig. 2) versehen ist.

Damit das Rohrstück 26 mit einer handelsüblichen Lüftereinheit 15 befestigbar ist, wird ein Adapterring 46 (Fig. 1) eingesetzt, der die Zapfen 30 trägt und mit dem Filtergehäuse 16 verbunden, z. B. verschraubbar, ist. Die Verbindungs-Lösung zwischen Filteraufnahme, d. h. Filtergehäuse 10, und Lüfter bzw. Lüftergehäuse 16 kann auch durch einen am Lüfter bzw. am Lüftergehäuse 16 standardmäßig angebrachten Ring realisiert sein. Dieser befindet sich am Einlass des Lüfters und ist mit entsprechenden Stegen, welche die L-förmigen Materialeinschnitte aufnehmen, versehen. Vorhandene Stege einer handelsüblichen Standardlüftereinheit können so genutzt werden. Diese Verbindung zwischen Filtergehäuse 10 und Lüftergehäuse 16 wäre auch durch eine andere kraftschlüssige Verbindung möglich. Der Begriff "bajonettartig" ist im Sinne dieser Beschreibung weit auszulegen, so dass die gezeigte Lösung als Bajonettverschluss bezeichnet werden kann.

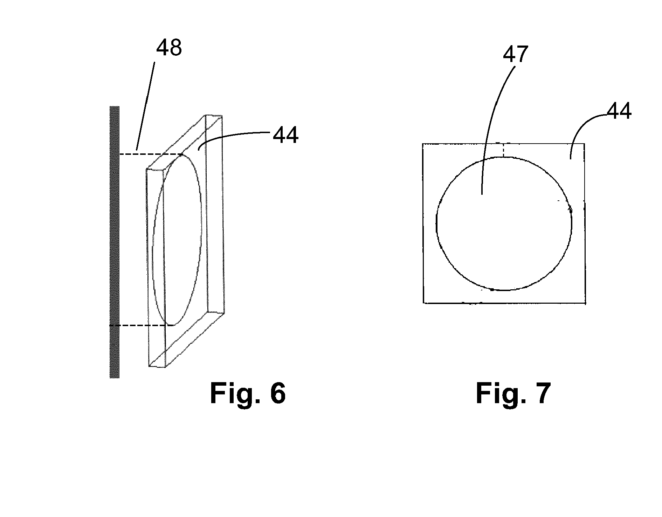

Die Fig. 6 und 7 zeigen einen optionalen Schlauchanschlussstutzen 44 mit einer runden Öffnung 47, die zum Anschluss eines nicht gezeigten Verlängerungsschlauches dient, wobei der Schlauch vor dem Filter 12 an der Lufteintrittsseite 11 liegt und an dem angedeuteten Schlauchstutzen 48 anschließbar ist.

Die Figuren veranschaulichen eine Filtervorrichtung 100 zur Filterung eines Farbnebels von mittels Druckluft und/oder mittels einer Sprühpistole versprühten Farben für das Maler- und Lackierhandwerk sowie zur Verwendung in bzw. auf Baustellen, welche ein Filtergehäuse 10 umfasst mit mindestens einer Lufteintrittsseite 11, an der im Filtergehäuse 10 ein leicht wechselbarer Filter 12 zur Filterung des Farb-Sprühnebels angeordnet ist, mit einer Luftaustrittsseite 13, an der ein Anschlussstück 14 zum Verbinden des Filtergehäuses 10 mit einer Lüftereinheit 15 angeordnet ist, wobei das Filtergehäuse 10 als Filtervorsatz für die Lüftereinheit 15 ausgeführt ist, und die Lüftereinheit 15 umfasst ein Lüftergehäuse 16 mit einer Lufteintrittsseite 17 und einer Luftaustrittsseite 18, wobei im Lüftergehäuse 16 ein Lüfter 20 und eine mit dem Lüfter 20 verbundene Antriebseinheit 21 (Fig. 8) angeordnet sind, wobei die Filtervorrichtung 100 als nicht-stationäre bzw. transportable, mobile Einheit ausgeführt ist.

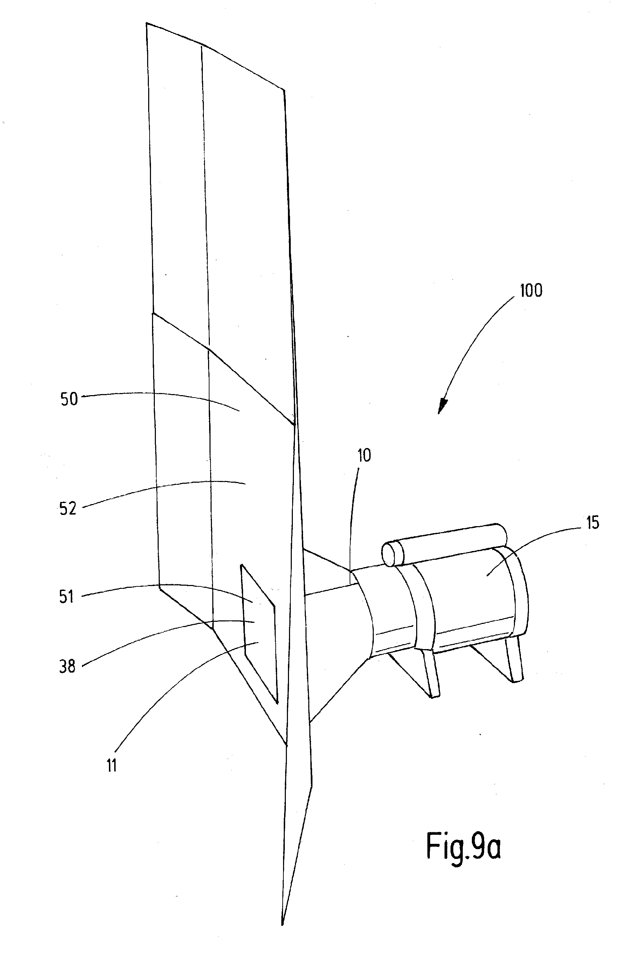

Fig. 9a zeigt eine perspektivische Ansicht einer Filtervorrichtung 100 mit einer Lüftereinheit 15 und einem mit der Lüftereinheit 15 verbundenem Filtergehäuse 10. Im Bereich der Lufteintrittsseite 11 des Filtergehäuses 10 ist ein Mittel 50 zur Vergrößerung der Ansaugfläche angeordnet. Das Mittel 50 zur Vergrößerung der Ansaugfläche weist eine Ansaugöffnung 51 auf, welche mit der Lufteintrittsseite 11 der Filtervorrichtung 100 korrespondiert. Um die Ansaugöffnung 51 des Mittels 50 zur Vergrößerung der Ansaugfläche herum ist eine Wand 52 angeordnet, deren äußere Kanten die vergrößerte effektive Ansaugfläche definieren. Die Wand 52 des Mittels 50 zur Vergrößerung der Ansaugfläche ist aus Kunststoff und flexibel ausgebildet. Somit ist das Mittel 50 zur Vergrößerung der Ansaugfläche zusammenfaltbar. Ferner ist die Wand 52 des Mittels 50 zur Vergrößerung der Ansaugfläche derart geknickt beziehungsweise gekrümmt ausgebildet, dass hierdurch die effektive Ansaugfläche vergrößert werden kann. Die Wand 52 des Mittels 50 zur Vergrößerung der Ansaugfläche ist paravent-artig ausgebildet und dient zum Auffangen des Farb-Sprühnebels.

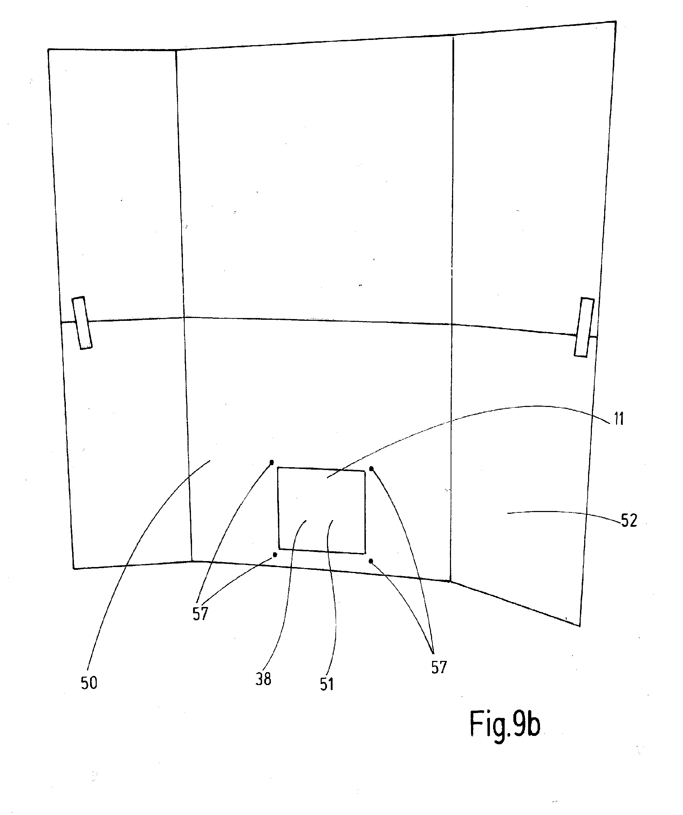

Figur 9b zeigt eine weitere perspektivische Ansicht einer Filtervorrichtung 100 mit an der Lufteintrittsseite 11 des Filtergehäuses 10 angeordnetem Mittel 50 zur Vergrößerung der Ansaugfläche. Aus Figur 9b ist ersichtlich, dass das Mittel 50 zur Vergrößerung der Ansaugfläche mittels Schraubverbindungen 57 stirnseitig an die umlaufende Kante der Lufteintrittsseite 11 des Filtergehäuses 10 angeschraubt und somit fest verbunden ist.

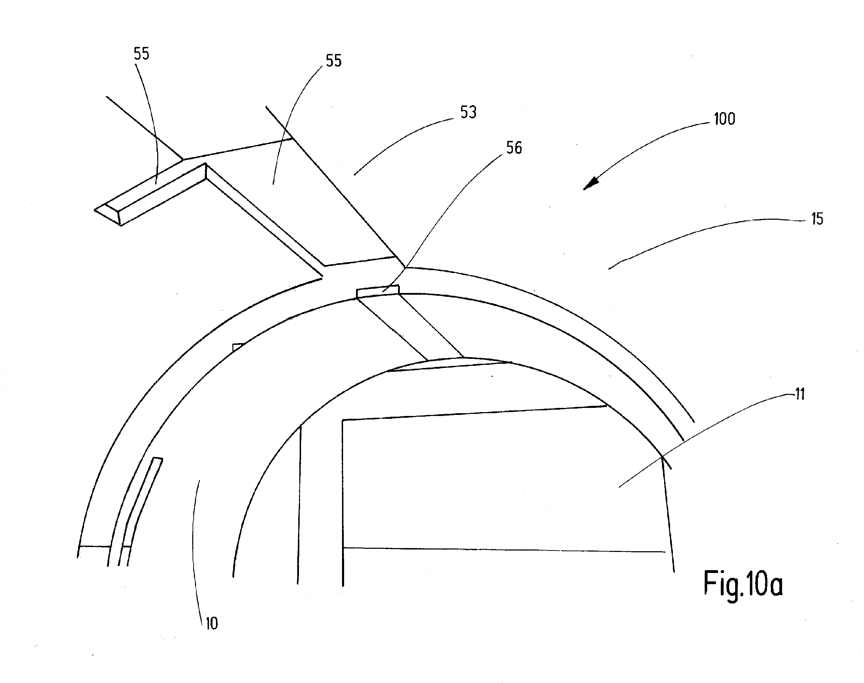

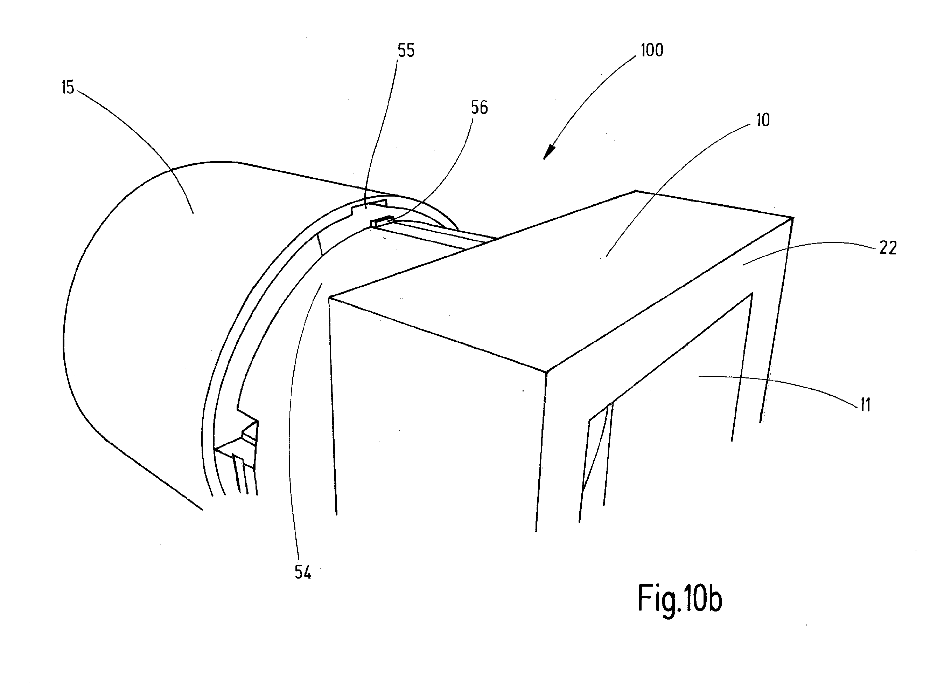

Fig. 10a und 10b zeigen perspektivische Ansichten einer bajonettartigen Verbindung zwischen einem Filtergehäuse 10 und einer Lüftereinheit 15 der Filtervorrichtung 100. Dabei sind in den Fig. 10a und 10b lediglich Ausschnitte gezeigt.

Fig. 10a zeigt einen Ausschnitt einer Innenansicht auf die Verbindungsstelle zwischen Filtergehäuse 10 und Lüftereinheit 15. In der Innenwand 53 des Lüftergehäuses 16 ist eine im Wesentlichen L-förmige Ausnehmung zur Aufnahme einer korrespondierenden Erhebung 56 angeordnet. Die korrespondierende Erhebung 56 ist auf der Außenwand 54 des Filtergehäuses 10 angeordnet. Somit kann das Filtergehäuse 10 mit der Lüftereinheit 15 in einfacher Weise sowie auch hinreichend luftdicht verbunden werden. Dies ist insbesondere dadurch möglich, da die bajonettartige Verbindung auf der einen Seite eine Ausnehmung, aber keine vollständige Durchbrechung, aufweist in die eine auf dem Gegenstück angebrachte Erhebung 56 einführbar ist. Aufgrund der im Wesentlichen L-förmig ausgebildeten Ausnehmung 55 in der Innenwand 53 des Lüftergehäuses 16 kann das Filtergehäuse 10 mit der Lüftereinheit 15 durch Ineinanderschieben und anschließendes zueinander entgegengesetztes Drehen miteinander verbunden werden. Sowohl das Filtergehäuse 10 sowie auch das Lüftergehäuse 16 bestehen im Wesentlichen aus Kunststoff. Die Ausnehmungen 55 in der Innenwand 53 des Lüftergehäuses 16 weisen Metall auf oder sind als Art Metallschienen ausgebildet. Hierdurch kann die bajonettartige Verbindung zwischen dem Filtergehäuse 10 und der Lüftereinheit 15 robuster ausgestaltet werden.

Die Erfindung ist nicht auf dieses Beispiel beschränkt, so kann der Lüfter 20 auch ein Radiallüfter mit einer rechteckförmigen Lufteintrittsfläche sein. Auch ist ein Filtergehäuse 10 mit rundem Querschnitt denkbar. Auch kann die Erfindung in anderen Bereichen eingesetzt werden. So ist z. B. ein Einsatz in Kfz-Lackier-Werkstätten für Fahrzeuge, z. B. Kfz-Werkstätten, oder in Industriebereichen, in denen ein Lackieren von Teilen in Lackierkabinen grundsätzlich nicht möglich oder zu unwirtschaftlich wäre, denkbar.

### Bezugszeichenliste

- 100: Vorrichtung

- 10: Filtergehäuse
- 11: Lufteintrittsseite
- 12: Filter
- 12a: erste Lage
- 12b: zweite Lage
- 13: Luftaustrittsseite
- 14: Anschlussstück
- 15: Lüftereinheit
- 16: Lüftergehäuse
- 17: Lufteintrittsseite
- 18: Luftaustrittsseite

- 20: Lüfter
- 21: Antriebseinheit
- 22: Filterkasten
- 23: Filterbereich
- 24: Anschlusskanal
- 25: Zwischenbereich
- 26: Rohrstück
- 27: Zwischenstück
- 28: Lüfterbereich

- 30: Zapfen
- 31: erste Aussparung
- 32: zweite Aussparung
- 33: Einschnitte
- 34: Zunge
- 35: Filterdeckel
- 36: Schnellverschluss
- 37: Deckelgriff
- 38: Schutzgitter

- 40: Elektromotor
- 41: erster Standfuß
- 42: zweiter Standfuß
- 43: Handgriff
- 44: Schlauchanschlussstutzen
- 45: Einziehmuttern
- 46: Adapterring
- 47: Öffnung
- 48: Schlauchstutzen

- 50: Mittel zur Vergrößerung der Ansaugfläche
- 51: Ansaugöffnung
- 52: Wand
- 53: Innenwand des Lüftergehäuses
- 54: Außenwand des Filtergehäuses
- 55: Ausnehmungen
- 56: Erhebungen
- 57: Schraubverbindung

## Patentansprüche

1. Filtervorrichtung (100) zur Filterung eines Farbnebels, insbesondere von mittels Druckluft und/oder mittels einer Sprühpistole versprühten Farben für das Maler- und Lackierhandwerk sowie zur Verwendung auf Baustellen, welche umfasst
a) ein Filtergehäuse (10)
- mit mindestens einer Lufteintrittsseite (11), an der im Filtergehäuse (10) ein wechselbarer Filter (12) zur Filterung des Farb-Sprühnebels angeordnet ist,
- mit einer Luftaustrittsseite (13), an der ein Anschlussstück (14) zum Verbinden des Filtergehäuses (10) mit einer Lüftereinheit (15) angeordnet ist,
- wobei das Filtergehäuse (10) als Filtervorsatz für die Lüftereinheit ausgeführt ist, und
b) die Lüftereinheit (15) umfasst
- ein Lüftergehäuse (16) mit einer Lufteintrittsseite (17) und einer Luftaustrittsseite (18),
- wobei im Lüftergehäuse (16) ein Lüfter (20) und eine mit dem Lüfter (20) verbundene Antriebseinheit (21) angeordnet sind,
c) wobei die Filtervorrichtung (100) als nicht-stationäre bzw. transportable, mobile Einheit ausgeführt ist.

2. Filtervorrichtung nach Anspruch 1, **dadurch gekennzeichnet, dass** das Filtergehäuse (10) einen Filterkasten (22) umfasst, der einen Filterbereich (23) mit einem größeren Querschnitt als ein sich an dem Lüftergehäuse (16) anschließenden Anschlusskanal (24) aufweist, wobei zwischen dem Filterbereich (23) und dem Anschlusskanal (24) ein trichterförmig sich verkleinernder Zwischenbereich (25) vorhanden ist.

3. Filtervorrichtung nach Anspruch 2, **dadurch gekennzeichnet, dass** der Filterbereich (23) einen rechteckigen, insbesondere quadratischen Querschnitt zur Aufnahme eines rechteckigen, insbesondere quadratischen Filters (12) aufweist, dass der sich an dem Lüftergehäuse (16) anschließende Anschlusskanal (24) als rundes Rohrstück (26) ausgeführt ist, und dass ein im Zwischenbereich (25) liegendes Zwischenstück (27a) von einer rechteckigen, insbesondere quadratischen Form in eine runde Form übergeht, wobei ein Anschlussstück (14) des Anschlusskanals (24) vorzugsweise eine bajonettartige Verbindung aufweist.

4. Filtervorrichtung nach Anspruch 2 oder 3, **dadurch gekennzeichnet, dass** der Filterbereich (23) eine mindestens doppelt so große, insbesondere etwa 2,7-mal so große Querschnittsfläche wie der sich an dem Lüftergehäuse (16) anschließende Anschlusskanal (24) aufweist.

5. Filtervorrichtung nach einem der vorhergehenden Ansprüche, **dadurch gekennzeichnet, dass** das Filtergehäuse (16) einen seitlich des Filters (12) verlaufenden, abnehmbaren oder schwenkbaren Filterdeckel (35) umfasst, der zum Austausch des als Einsatz-Filter ausgeführten Filters (12) ausgeführt ist, wobei der Filterdeckel (35) mit mindestens einem Schnellverschluss (36) verschließbar und wieder entfernbar ist.

6. Filtervorrichtung nach einem der vorhergehenden Ansprüche, **dadurch gekennzeichnet, dass** das Filtergehäuse (10) ein an seiner Lufteintrittsseite (11) angeordnetes Schutzgitter (38) umfasst.

7. Filtervorrichtung nach einem der vorhergehenden Ansprüche, **dadurch gekennzeichnet, dass** die Lüftereinheit (15) einen Axiallüfter (20) und ein zylinderförmiges Lüftergehäuse (16) mit einem im zylinderförmigen Lüftergehäuse (16) integrierten Elektromotor (40) umfasst.

8. Filtervorrichtung nach einem der vorhergehenden Ansprüche, **dadurch gekennzeichnet, dass** das Filtergehäuse (10) als Blechgehäuse oder Kunststoffgehäuse ausgeführt ist und/oder das Lüftergehäuse (16) als Kunststoffgehäuse ausgeführt ist oder aus Kunststoff besteht.

9. Filtervorrichtung nach einem der vorhergehenden Ansprüche, **dadurch gekennzeichnet, dass** die Lüftereinheit (15) an ihrem Lüftergehäuse (16) Standelemente, insbesondere zwei oder mehrere hintereinander liegende Standfüße (41, 42) aufweist, die das Lüftergehäuse (16) soweit anheben, dass die Filtervorrichtung (100), vorzugsweise waagerecht, aufstellbar ist, wobei das Lüftergehäuse (16) mit einem Handgriff (43) versehen ist.

10. Filtervorrichtung nach einem der vorhergehenden Ansprüche, **dadurch gekennzeichnet, dass** im Bereich der Lufteintrittsseite (11) des Filtergehäuses (10) ein Mittel (50) zur Vergrößerung der Ansaugfläche angeordnet ist.

11. Filtervorrichtung nach einem der vorhergehenden Ansprüche, **dadurch gekennzeichnet, dass** der wechselbare Filter (12) zur Filterung des Farb-Sprühnebels eine erste Lage (12a) und eine zweite Lage (12b) umfasst, wobei diese beiden Lagen (12a, 12 b) unterschiedliche Materialien aufweisen oder aus unterschiedlichen Materialien bestehen.

12. Filtervorrichtung nach Anspruch 11, **dadurch gekennzeichnet, dass** die erste Lage (12a) Glasfasern aufweist und/oder als Glasfaservlies ausgebildet ist, wobei die zweite Lage (12b) Polyester aufweist und/oder als Polyestervlies ausgebildet ist.

13. Filtervorrichtung nach einem der vorhergehenden Ansprüche, **dadurch gekennzeichnet, dass** die Lüftereinheit (15) im Bereich dessen Lufteintrittsseite (17) in einer Innenwand (53) des Lüftergehäuses (16) Ausnehmungen (55) zur Aufnahme von an einer Außenwand (54) des Filtergehäuses (10) angeordneten Erhebungen (56) aufweist.

14. Filtervorrichtung nach Anspruch 13, **dadurch gekennzeichnet, dass** die Ausnehmungen (55) und die Erhebungen (56) derart ausgebildet und angeordnet sind, dass das Lüftergehäuse (16) und das Filtergehäuse (10) durch Ineinanderschieben und anschließendes zueinander entgegengesetztes Drehen miteinander verbindbar sind.

15. Lüftereinheit (15), welche zur Verbindung mit einem Filtergehäuse (10) ausgebildet ist, wobei die Lüftereinheit (15) ein Lüftergehäuse (16) mit einer Lufteintrittsseite (17) und einer Luftaustrittsseite (18) aufweist, und wobei im Lüftergehäuse (16) ein Lüfter (20) und eine mit dem Lüfter (20) verbundene Antriebseinheit (21) angeordnet sind, **dadurch gekennzeichnet, dass** die Lüftereinheit (15) im Bereich dessen Lufteintrittsseite (17) in einer Innenwand (53) des Lüftergehäuses (16) Ausnehmungen (55) zur Aufnahme von an einer Außenwand (54) eines Filtergehäuses (10) angeordneten Erhebungen (56) aufweist.

16. Verfahren zum Filtern eines Farbnebels in Baustellen mit einer in Nähe einer Sprühpistole oder einer anderen Sprühvorrichtung aufstellbaren mobilen Filtervorrichtung nach einem der vorhergehenden Ansprüche.
